# EUROPÄISCHE PATENTSCHRIFT

(11) **EP 4 420 951 B1**
(45) Veröffentlichungstag und Bekanntmachung des Hinweises auf die Patenterteilung: **10.06.2026**
(21) Anmeldenummer: 24153905.5
(22) Anmeldetag: 25.01.2024
(51) Int. Cl.: B61D 27/00, B60H 1/00

(54) **ABLUFTSYSTEM, KLIMATISIERUNGSSYSTEM UND SPURGEFÜHRTES FAHRZEUG**
EXHAUST AIR SYSTEM, AIR CONDITIONING SYSTEM, AND TRACK-GUIDED VEHICLE
SYSTÈME D'ÉCHAPPEMENT D'AIR, SYSTÈME DE CLIMATISATION ET VÉHICULE GUIDÉ

(30) Priorität: 22.02.2023 DE 102023201597
(43) Veröffentlichungstag der Anmeldung: 28.08.2024
(73) Patentinhaber: Siemens Mobility GmbH, 80997 München (DE)
(72) Erfinder: Plinninger, Thomas, 83026 Rosenheim (DE)
(74) Vertreter: Siemens Patent Attorneys

(56) Entgegenhaltungen:
- WO-A1-2021/110354
- DE-A1- 102007 005 050
- DE-A1- 102009 025 299
- DE-A1- 2 542 768
- US-A- 4 219 071

## Beschreibung

Die Erfindung betrifft ein Abluftsystem für ein Klimatisierungssystem eines spurgeführten Fahrzeugs zum Personentransport.

Die Erfindung betrifft weiterhin ein Klimatisierungssystem umfassend ein solches oder wie nachfolgend beschrieben weitergebildetes Abluftsystem.

Die Erfindung betrifft ferner ein spurgeführtes Fahrzeug zur Personenbeförderung mit einem Innenraum umfassend, ein solches oder wie nachfolgend beschrieben weitergebildetes Abluftsystem und ein solches oder wie nachfolgend beschrieben weitergebildetes Klimatisierungssystem.

Die Erfindung betrifft weiter ein Verfahren zum Betreiben eines Abluftsystems für ein spurgeführtes Fahrzeug zum Personentransport.

Ferner betrifft die Erfindung ein Verfahren zum Betreiben eines Klimatisierungssystems umfassend ein solches oder wie nachfolgend beschrieben weitergebildetes Verfahren zum Betreiben eines Abluftsystems.

Bei der Klimatisierung und Be- und Entlüftung des Innenraums von spurgeführten Fahrzeugen, wie Schienenfahrzeugen, hat man es oft mit wechselnder Verteilung der äußeren und inneren thermischen Lasten zu tun. In vielen Zuständen ist die Verteilung der Lasten zwar recht homogen (z.B. gleichmäßig Verteilung der Personen im Innenraum) aber in einigen Fällen kommt es zu stark asymmetrischer thermischer Lastverteilung. Ein Beispiel hier ist die Sonneneinstrahlung, falls diese seitlich bzw. schräg auf einen Zug wirkt und damit eine Wagenhälfte deutlich stärker erwärmt wird als die andere. Klimasysteme, die auf eine gleichmäßige Einbringung der Luft in den Innenraum abgestimmt sind, können auf solche asymmetrischen thermischen Lasten nicht reagieren.

Die Einbringung von Luft in den Innenraum und das Ablüften von Luft aus dem Innenraum von spurgeführten Fahrzeugen, wie Schienenfahrzeugen, erfolgt in der Regel homogen, um in einem Grundzustand eine gute Temperaturverteilung im Wagen zu erreichen. Auf asymmetrische Lasten wie Sonneneinstrahlung auf eine Wagenhälfte kann damit kaum reagiert werden. Teilweise werden manuell einstellbare Zuluftdüsen verwendet (ähnlich der Situation in Flugzeugen) die jedoch keine automatisierte Lösung bieten und oft zu lokalen Zuglufterscheinen führen. Das Dokument WO2021/110354A1 offenbart ein gattungsgemäßes Abluftsystem.

Das Dokument US 4219071 A1 beschreibt ein gattungsgemäßes Abluftsystem.

Ausgehend davon liegt der Erfindung die Aufgabe zugrunde ein verbessertes Abluftsystem bereitzustellen.

Diese Aufgabe wird durch das Abluftsystem des Anspruchs 1 gelöst. Ferner wird diese Aufgabe durch das Klimatisierungssystem gemäß Anspruch 3 gelöst. Zudem wird diese Aufgabe durch das spurgeführte Fahrzeug gemäß Anspruch 5 gelöst. Ferner wird diese Aufgabe durch das Verfahren zum Betreiben eines Abluftsystems gemäß Anspruch 8 gelöst. Weiterhin wird diese Aufgabe durch das Verfahren zum Betreiben eines Klimatisierungssystems nach Anspruch 9 gelöst.

Erfindungsgemäß wird ein Abluftsystem für ein Klimatisierungssystem eines spurgeführten Fahrzeugs zum Personentransport bereitgestellt. Das Abluftsystem umfasst zumindest ein erstes Abluftkanalsystem und zumindest ein zweites Abluftkanalsystem, wobei das Abluftsystem derart ausgestaltet ist, dass ein erster Abluftstrom des ersten Abluftkanalsystems und ein zweiter Abluftstrom des zweiten Abluftkanalsystems im Volumenstrom unterschiedlich einstellbar sind.

Ferner wird erfindungsgemäß ein Klimatisierungssystem umfassend ein solches oder wie nachfolgend beschrieben weitergebildetes Abluftsystem bereitgestellt, umfassend ein Klimagerät zur Klimatisierung eines Innenraums des spurgeführten Fahrzeugs und zumindest eine Zuluftvorrichtung zur Bereitstellung eines Zuluftstroms für den Innenraum. Die im Volumenstrom unterschiedliche Einstellbarkeit des ersten Abluftstroms des ersten Abluftkanalsystems und des zweiten Abluftstroms des zweiten Abluftkanalsystems erlaubt die Ausbildung mehrerer Klimatisierungszonen im Innenraum des spurgeführten Fahrzeugs.

Weiterhin wird erfindungsgemäß ein spurgeführtes Fahrzeug zur Personenbeförderung mit einem Innenraum umfassend ein solches oder wie nachfolgend beschrieben weitergebildetes Abluftsystem oder ein solches oder wie nachfolgend beschrieben weitergebildetes Klimatisierungssystem, wobei das spurgeführte Fahrzeug zumindest zwei sich parallel zur Längsachse des spurgeführten Fahrzeugs erstreckende Seitenwände, einen Bodenbereich und einen Dachbereich aufweist, wobei sich das erste Abluftkanalsystem und das zweite Abluftkanalsystem jeweils entlang oder innerhalb einer der Seitenwände erstrecken.

Erfindungsgemäß wird ferner ein Verfahren zum Betreiben eines Abluftsystems für ein spurgeführtes Fahrzeug zum Personentransport bereitgestellt, umfassend ein erstes Abluftkanalsystem und zumindest ein zweites Abluftkanalsystem. Das Verfahren umfasst den folgenden Schritt: im Volumenstrom unterschiedliches Einstellen eines ersten Abluftstroms des ersten Abluftkanalsystems und eines zweiten Abluftstroms des zweiten Abluftkanalsystems.

Erfindungsgemäß wird weiterhin ein Verfahren zum Betreiben eines Klimatisierungssystems für ein spurgeführtes Fahrzeug zum Personentransport, umfassend das ein solches oder wie nachfolgend beschrieben weitergebildetes Verfahren zum Betreiben eines Abluftsystems, bereitgestellt. Das Klimatisierungssystem weist das Abluftsystem, ein Klimagerät zur Klimatisierung eines Innenraums des spurgeführten Fahrzeugs und zumindest eine Zuluftvorrichtung auf. Das Verfahren umfasst folgende Schritte: Bereitstellen eines Zuluftstroms durch die Zuluftvorrichtung; im Volumenstrom unterschiedliches Einstellen des ersten Abluftstroms des ersten Abluftkanalsystems und des zweiten Abluftstroms des zweiten Abluftkanalsystems zur Ausbildung mehrerer Klimatisierungszonen im Innenraum des spurgeführten Fahrzeugs.

Der Innenraum des spurgeführten Fahrzeugs zur Personenbeförderung kann dabei beispielsweise eine Mehrzahl an Sitzen aufweisen. Diese können in unterschiedlichen Sitzlandschaften angeordnet sein.

Der Zuluftstrom kann dabei kalte oder warme Luft dem Innenraum zuführen und wird vorzugsweise von der Decke des Innenraums dem Innenraum zugeführt.

Das Abluftsystem ist dazu ausgebildet Luft aus dem Innenraum zu dem Klimagerät zurückzuführen.

Hierdurch wird ein System zum asymmetrischen Ablüften (oder Absaugen) der Abluft aus dem Innenraum des spurgeführten Fahrzeugs realisiert. Die erfindungsgemäße Ausgestaltung kommt ohne manuell einzustellende Düsen oder ähnliches aus. Außerdem kann die Zuluft weiterhin homogen verteilt in den Innenraum eingebracht werden. Die weitere Luftströmung im Innenraum wird durch das asymmetrische Absaugen der Luft bestimmt, was zu deutlich homogeneren Strömungen führt als eine asymmetrische Zulufteinbringung, welche meist zu lokalen Jets/Zuglufterschweinungen im Kopfbereich führt.

Durch unterschiedlich einstellbare erste und zweite Abluftströme im ersten Abluftkanalsystem und zweiten Abluftkanalsystem kann auf asymmetrische Lasten wie Sonneneinstrahlung oder ungleichmäßige Besetzung im spurgeführten Fahrzeug, insbesondere einem Wagen des spurgeführten Fahrzeugs, reagiert werden.

Somit wird eine Vergleichmäßigung der Temperaturverteilung im Innenraum erreicht.

Bei dem spurgeführten Fahrzeug kann es sich insbesondere um ein Schienenfahrzeug handeln.

Das erfindungsgemäße Abluftsystems sieht vor, dass das Abluftsystem zumindest eine Verstelleinrichtung, zum im Volumenstrom unterschiedlichen Einstellen des ersten Abluftstroms und/oder des zweiten Abluftstroms umfasst.

Hierdurch wird eine Ausgestaltung angegeben, die es erlaubt den ersten und/oder den zweiten Abluftstrom unterschiedlich einzustellen.

Die Verstelleinrichtung kann bspw. als Klappe ausgebildet.

Ferner kann vorgesehen sein, dass die Verstelleinrichtung über einen Stellmotor in der Art veränderbar ist, dass gezielt mehr Abluft von der erwärmten Wagenseite durch das erste und/oder zweite Abluftkanalsystem angesaugt wird.

Es kann beispielsweise vorgesehen sein, dass durch eine Grundstellung der Verstelleinrichtung auf von vornherein vorhandene asymmetrische Situationen (z.B. Sitzlayout 1+2 statt 2+2) einstellbar ist, ohne dass eine Zuluftführung des Klimatisierungssystems des Schienenfahrzeugs für solche Layouts neu gestaltet werden muss.

In Weiterbildung des Abluftsystems kann vorgesehen sein, dass das Abluftsystem einen dem ersten Abluftkanalsystem zugeordneten ersten Temperatursensor aufweist und einen dem zweiten Abluftkanalsystem zugeordneten zweiten Temperatursensor aufweist. Der erste Temperatursensor und der zweite Temperatursensor sind betriebsmäßig mit einer Steuerung verbunden und die Steuerung ist dazu eingerichtet, die zumindest eine Verstelleinrichtung einzustellen, wodurch der erste Abluftstrom des ersten Abluftkanalsystems und der zweite Abluftstrom des zweiten Abluftkanalsystems im Volumenstrom unterschiedlich einstellbar sind.

Vorzugsweise sind erste und zweite Temperatursensoren auf beiden Wagenseiten zur Messung der jeweiligen Ablufttemperatur ausgebildet.

Die Temperatursensoren erfassen die Temperatur der Abweichung von beiden Wagenseiten. Tritt eine asymmetrische Last auf, wie z.B.: Sonneneinstrahlung auf einer Wagenseite, so registrieren die Sensoren eine deutliche Abweichung der Temperaturen beider Wagenhälften und die Verstelleinrichtung wird durch die Steuerung angesteuert.

Das erfindungsgemäße Abluftsystem sieht vor, dass die zumindest eine Verstelleinrichtung eine zentrale Verstelleinrichtung ist, die vorzugsweise als Klappe ausgebildet ist, und im Abluftsystem derart angeordnet ist, dass durch diese der Abluftstrom des ersten Abluftkanalsystems im Volumenstrom einstellbar ist und der zweite Abluftstrom des zweiten Abluftkanalsystems im Volumenstrom einstellbar ist, wobei die Summe aus dem ersten Abluftstrom und dem zweiten Abluftstrom bei einer gegebenen Gesamtabluftleistung des Abluftsystems konstant ist.

Vorzugsweise ist die Verstelleinrichtung als eine regelbare Klappe mit Stellmotor oder ähnlichem im Bereich des Klimageräts ausgebildet.

Die Gesamtabluftleistung ist dabei konstant (beliebig, aber fest), sodass das Abluftsystem an einem gegebenen Betriebspunkt unterschiedlich starke erste und zweite Abluftströme ausbilden kann.

In Weiterbildung des Klimatisierungssystems kann vorgesehen sein, dass das erste Abluftkanalsystem und das zweite Abluftkanalsystem derart ausgebildet sind, dass der erste Abluftstrom und der zweite Abluftstrom dem zumindest einem Klimagerät zuführbar sind.

Hierdurch wird erreicht, dass die Abluft anschließend durch das Klimagerät konditionierbar ist und dem Innenraum wieder zugeführt werden kann. Dabei kann sowohl die Temperatur als auch die Luftfeuchte der Zuluft durch das Klimagerät eingestellt werden. Ferner kann das Klimagerät zusätzlich zur Abluft auch Luft von außerhalb des Fahrzeugs ansaugen und mit dem konditionierten Abluftstrom mischen.

In Ausgestaltung des spurgeführten Fahrzeugs kann vorgesehen sein, dass das Klimagerät im Dachbereich des spurgeführten Fahrzeugs angeordnet ist und das erste Abluftkanalsystem und das zweite Abluftkanalsystem im Bodenbereich jeweils zumindest eine Abluftansaugöffnung aufweisen.

Hierdurch wird erreicht, dass Abluft aus dem Bodenbereich unterschiedlicher Bereiche, wie zum Beispiel beider Wagenseiten, angesaugbar ist.

Ferner kann das spurgeführte Fahrzeug dahingehend ausgebildet sein, dass zwei Klimatisierungszonen im Fahrzeuginnenraum in Querrichtung des spurgeführten Fahrzeugs nebeneinander ausbildbar sind und eine erste Klimatisierungszone auf der einen Seite der Mitte des Fahrzeuginnenraums ausbildbar ist und eine zweite Klimatisierungszone auf der anderen Seite der Mitte des Fahrzeuginnenraums ausbildbar ist.

Hierdurch ist es möglich, dass im Innenraum die eingebrachte Zuluft mehr auf eine beispielsweise durch Sonneneinstrahlung oder einen erhöhten Personenbelegungsgrad erwärmte Wagenseite gezogen und damit dieser Bereich besser kühlbar ist. Somit wird eine Vergleichmäßigung der Temperaturverteilung im Innenraum erreicht.

Soweit vorstehend Vorteile für die vorrichtungsmäßige Ausgestaltung genannt worden, gelten diese in gleichermaßen für die nachfolgend aufgeführten Verfahrensschritte der Verfahren. Wiederholung zu vermeiden, werden diese nach der Anspruchswiederholung der einzelnen Verfahrensschritte nicht noch einmal gesondert aufgeführt, sondern es wird ohne gesonderten Verweis auf die jeweiligen Unteransprüche der Vorrichtungen verwiesen.

In Weiterbildung des Verfahrens zum Betreiben des Abluftsystems kann vorgesehen sein, dass das Verfahren ferner den folgenden Schritt umfasst: Einstellen des ersten Abluftstroms und/oder des zweiten Abluftstroms des Abluftsystems durch zumindest eine Verstelleinrichtung.

In Weiterbildung des Verfahrens zum Betreiben des Klimatisierungssystems kann vorgesehen sein, dass das Verfahren ferner den folgenden Schritt umfasst: Zuführen des ersten Abluftstroms durch das erste Abluftkanalsystem und des zweiten Abluftstroms durch das zweite Abluftkanalsystem zu dem zumindest einen Klimagerät.

In Ausgestaltung des Verfahrens zum Betreiben des Klimatisierungssystems kann vorgesehen sein, dass das Verfahren ferner den folgende Schritte umfasst: Messen eines ersten Temperaturwerts durch einen dem ersten Abluftkanalsystem zugeordneten ersten Temperatursensor; Messen eines zweiten Temperaturwerts durch einen dem zweiten Abluftkanalsystem zugeordneten zweiten Temperatursensor; Übermitteln des ersten Temperaturwerts des ersten Temperatursensorsund des zweiten Temperaturwerts des zweiten Temperatursensors an eine betriebsmäßig mit diesen verbundene Steuerung des Abluft- und/oder Klimatisierungssystems; Ansteuern der zumindest einen Verstelleinrichtung durch die Steuerung des Abluft- und/oder Klimatisierungssystems, wodurch der erste Abluftstrom des ersten Abluftkanalsystems und der zweite Abluftstrom des zweiten Abluftkanalsystems im Volumenstrom unterschiedlich eingestellt wird.

Ferner sieht das erfindungsgemäße Verfahren zum Betreiben des Abluftsystems folgende Schritte vor: im Volumenstrom unterschiedliches Einstellen des ersten Abluftstroms des ersten Abluftkanalsystems und des zweiten Abluftstroms des zweiten Abluftkanalsystems durch eine zentrale Verstelleinrichtung, die vorzugsweise als Klappe ausgebildet ist, und dabei Konstanthalten der Summe des Volumenstroms aus dem ersten Abluftstrom und dem zweiten Abluftstrom bei einer gegebenen Abluftleistung während des Einstellens des ersten Abluftstroms und des zweiten Abluftstroms.

Weiterhin kann in Ausgestaltung des Verfahrens zum Betreiben des Abluftsystems oder des Verfahrens zum Betreiben des Klimatisierungssystems folgender Schritt vorgesehen sein: Durchströmen von Abluft durch das erste Abluftkanalsystem und das zweite Abluftkanalsystem, die sich jeweils entlang oder innerhalb zumindest zweier sich parallel zur Längsachse des spurgeführten Fahrzeugs erstreckenden Seitenwände erstecken.

Weiterhin kann in Ausgestaltung des Verfahrens zum Betreiben des Abluftsystems oder des Verfahrens zum Betreiben des Klimatisierungssystems folgender Schritt vorgesehen sein: Ansaugen von Luft aus dem Innenraum durch jeweils eine im Bodenbereich des spurgeführten Fahrzeugs angeordnete Abluftansaugöffnung in das erste Abluftkanalsystem und das zweite Abluftkanalsystem durch ein sich im Dachbereich des spurgeführtes Fahrzeugs angeordnetes Klimagerät zum Bereitstellen zweier Klimatisierungszonen im Fahrzeuginnenraum in Querrichtung des spurgeführten Fahrzeugs nebeneinander, wobei sich eine Klimatisierungszone auf der einen Seite der Mitte des Fahrzeuginnenraums befindet und sich die andere Klimatisierungszone auf der anderen Seite der Mitte des Fahrzeuginnenraums befindet.

Nachfolgend soll die Erfindung anhand eines Ausführungsbeispiels mit Bezug auf die Zeichnungen erläutert werden.

Es zeigt:
- Fig. 1: in einer schematischen Schnittdarstellung ein erfindungsgemäßes spurgeführtes Fahrzeug mit einem erfindungsgemäßen Klimatisierungssystem umfassend ein erfindungsgemäßes Abluftsystem;
- Fig. 2: in einer schematischen Schnittdarstellung das erfindungsgemäße spurgeführte Fahrzeug mit dem erfindungsgemäßen Klimatisierungssystem umfassend das erfindungsgemäßes Abluftsystem gemäß Fig. 1 ergänzt um Zuluft- und Abluftströmen;
- Fig. 3: in einer schematischen Schnittdarstellung das erfindungsgemäße spurgeführte Fahrzeug mit dem erfindungsgemäßen Klimatisierungssystem umfassend das erfindungsgemäßes Abluftsystem gemäß Fig. 1 und 2 ergänzt um die Verstelleinrichtung und die Temperatursensoren;
- Fig. 4: in einer schematischen Schnittdarstellung das erfindungsgemäße spurgeführte Fahrzeug mit dem erfindungsgemäßen Klimatisierungssystem umfassend das erfindungsgemäßes Abluftsystem gemäß Fig. 3 in neutraler Stellung der Verstelleinrichtung; und
- Fig. 5: in einer schematischen Schnittdarstellung das erfindungsgemäße spurgeführte Fahrzeug mit dem erfindungsgemäßen Klimatisierungssystem umfassend das erfindungsgemäßes Abluftsystem gemäß Fig. 4 in ausgelenkter Stellung der Verstelleinrichtung.

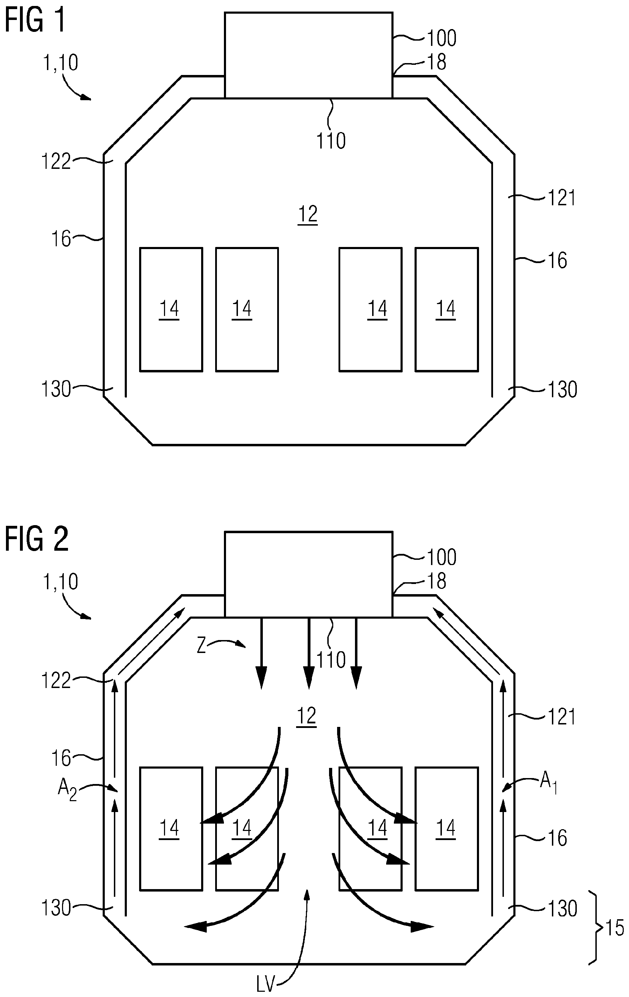

Fig. 1 zeigt in einer schematischen Schnittdarstellung ein erfindungsgemäßes spurgeführtes Fahrzeug 1 mit einem erfindungsgemäßen Klimatisierungssystem 10 umfassend ein erfindungsgemäßes Abluftsystem 120.

Das Abluftsystem 120 für das Klimatisierungssystem 10 des spurgeführten Fahrzeugs 1 zum Personentransport umfasst zumindest ein erstes Abluftkanalsystem 121 und zumindest ein zweites Abluftkanalsystem 122.

Das Klimatisierungssystem 10 umfasst das Abluftsystem 120, ein Klimagerät 100 zur Klimatisierung eines Innenraums 12 des spurgeführten Fahrzeugs 1 und zumindest eine Zuluftvorrichtung 110 zur Bereitstellung eines Zuluftstroms Z (vgl. Fig. 2, 4, 5) für den Innenraum 12.

Das spurgeführte Fahrzeug 1 zur Personenbeförderung weist einem Innenraum 12 auf, umfassend Klimatisierungssystem 10 mit dem das Abluftsystem 120. Das spurgeführte Fahrzeug 1 weist zumindest zwei sich parallel zur Längsachse des spurgeführten Fahrzeugs 1 erstreckende Seitenwände 16, einen Bodenbereich 15 und einen Dachbereich 18 auf. Das erste Abluftkanalsystem 121 und das zweite Abluftkanalsystem 122 erstrecken sich jeweils entlang oder innerhalb einer der Seitenwände 16.

Das Klimagerät 110 ist im Dachbereich 18 des spurgeführten Fahrzeugs 1 angeordnet und das erste Abluftkanalsystem 121 und das zweite Abluftkanalsystem 122 weist im Bodenbereich 15 jeweils zumindest eine Abluftansaugöffnung 130 auf.

Im Innenraum 12 des spurgeführten Fahrzeugs sind eine Mehrzahl von Sitzen 14 ausgebildet. Diese sind bspw. wie in Fig. 1 dargestellt links- und rechtseitig von einem Mittelgang angeordnet.

Fig. 2 zeigt in einer schematischen Schnittdarstellung das erfindungsgemäßes spurgeführte Fahrzeug 1 mit dem erfindungsgemäßen Klimatisierungssystem 10 umfassend das erfindungsgemäße Abluftsystem 120 gemäß Fig. 1 ergänzt um Zuluft- und Abluftströme Z, A₁, A₂.

Das Abluftsystem 120 ist derart ausgestaltet, dass ein erster Abluftstrom A₁ des ersten Abluftkanalsystems 121 und ein zweiter Abluftstrom A₂ des zweiten Abluftkanalsystems 122 im Volumenstrom unterschiedlich einstellbar sind.

Gemäß der in Fig. 2 dargestellten Konfiguration sind der erste Abluftstrom A₁ und der zweite Abluftstrom A₂ derart gleich ausgebildet, sodass sich eine symmetrische Luftverteilung LV im Innenraum 12 des spurgeführten Fahrzeugs 1 ausbildet.

Das erste Abluftkanalsystem 121 und das zweite Abluftkanalsystem 122 sind derart ausgebildet, dass der erste Abluftstrom A₁ und der zweite Abluftstrom A₂ dem zumindest einem Klimagerät 100 zuführbar sind.

Durch das Klimagerät 100 kann der zugeführte Abluftstrom A₁, A₂ konditioniert werden und wieder dem Innenraum 12 als Zuluftstrom Z zugeführt werden.

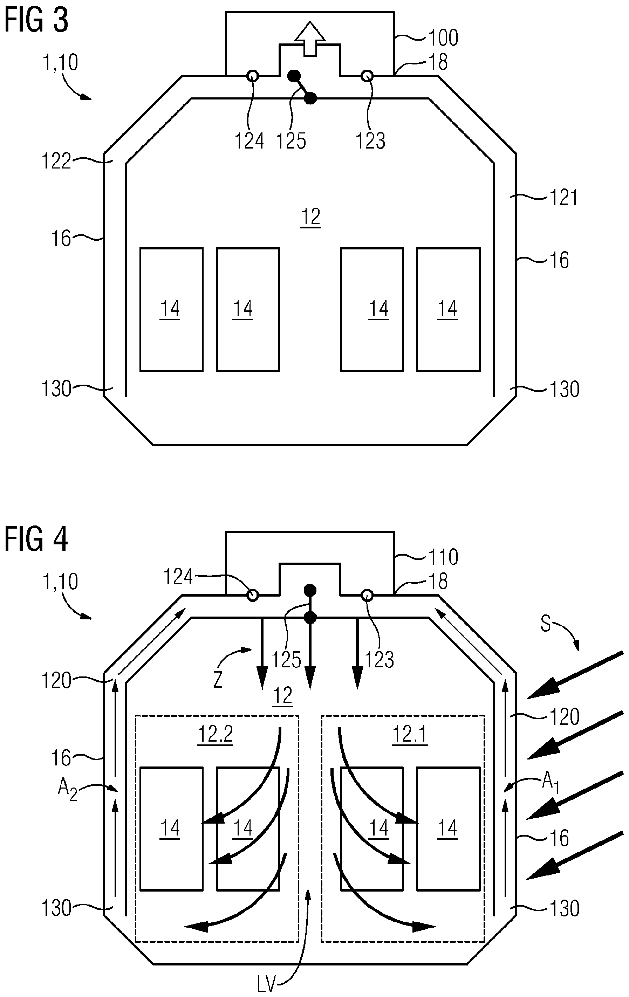

Fig. 3 zeigt in einer schematischen Schnittdarstellung das erfindungsgemäße spurgeführte Fahrzeug 1 mit dem erfindungsgemäßen Klimatisierungssystem 10 umfassend das erfindungsgemäßes Abluftsystem 120 gemäß Fig. 1 und 2 ergänzt um die zumindest eine Verstelleinrichtung 125 und die Temperatursensoren 123, 124.

Gemäß Figur 3 ist erkennbar, dass das Abluftsystem 120 zumindest eine Verstelleinrichtung 125 zum im Volumenstrom unterschiedlichen Einstellen des ersten Abluftstroms A₁ und/oder des zweiten Abluftstroms A₂ aufweist.

Ferner weist das Abluftsystem 120 einen dem ersten Abluftkanalsystem 121 zugeordneten ersten Temperatursensor 123 auf und einen dem zweiten Abluftkanalsystem 122 zugeordneten zweiten Temperatursensor 124 auf.

Der erste Temperatursensor 123 und der zweite Temperatursensor 124 sind jeweils betriebsmäßig mit einer Steuerung des Klimatisierungssystems 10 verbunden.

Die Steuerung ist dazu eingerichtet, die zumindest eine Verstelleinrichtung 125 einzustellen, wodurch der erste Abluftstrom A₁ des ersten Abluftkanalsystems 121 und der zweite Abluftstrom A₂ des zweiten Abluftkanalsystems 122 im Volumenstrom unterschiedlich einstellbar sind.

Die zumindest eine Verstelleinrichtung 125 ist gemäß Fig. 3 bis Fig. 5 als eine zentrale Verstelleinrichtung 125 ausgebildet.

Die zentrale Verstelleinrichtung 125 ist im Abluftsystem 120 derart angeordnet, dass durch diese der erste Abluftstrom A₁ des ersten Abluftkanalsystems 121 im Volumenstrom einstellbar ist und der zweite Abluftstrom A₂ des zweiten Abluftkanalsystems 122 im Volumenstrom einstellbar ist, wobei die Summe aus dem ersten Abluftstrom A₁ und dem zweiten Abluftstrom A₂ bei einer gegebenen Gesamtabluftleistung des Abluftsystems 120 konstant ist.

Die zumindest eine Verstelleinrichtung 125 ist vorzugsweise als Klappe ausgebildet.

Wie aus der Figur 3 ersichtlich ist, ist das erste Abluftkanalsystem 121 seitlich auf einer ersten Seite der zentralen Verstelleinrichtung 125 ausgebildet und das zweite Abluftkanalsystem 122 seitlich auf einer zweiten Seite der Verstelleinrichtung 125 ausgebildet. Die erste Seite und die zweite Seite liegen dabei einander gegenüber.

Fig. 4 zeigt in einer schematischen Schnittdarstellung das erfindungsgemäße spurgeführte Fahrzeug 1 mit dem erfindungsgemäßen Klimatisierungssystem 10 umfassend das erfindungsgemäße Abluftsystem 120 gemäß Fig. 3 in neutraler Stellung der Verstelleinrichtung 125.

Gemäß Fig. 4 ist erkennbar, dass eine Fahrzeuglängsseite durch Sonneneinstrahlung bestrahlt wird. Infolgedessen heizt sich eine Fahrzeugseite stärker auf als die andere Fahrzeugseite und es sind im Innenraum 12 durch die stärkere Aufheizung der einen Fahrzeugseite bei neutraler Stellung der Verstelleinrichtung 125 zwei unterschiedlich warme Klimatisierungszonen ausgebildet.

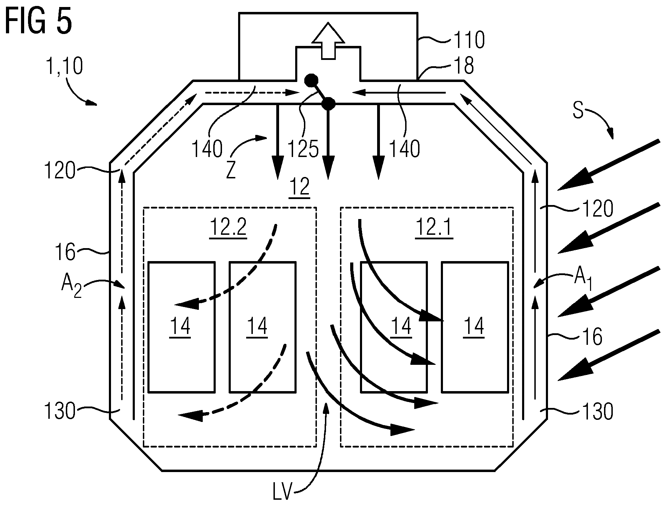

Fig. 5 zeigt in einer schematischen Schnittdarstellung das erfindungsgemäße spurgeführte Fahrzeug 1 mit dem erfindungsgemäßen Klimatisierungssystem 10 umfassend das erfindungsgemäße Abluftsystem 100 gemäß Fig. 4 in ausgelenkter Stellung der Verstelleinrichtung 125.

Die im Volumenstrom unterschiedliche Einstellbarkeit des ersten Abluftstroms A₁ des ersten Abluftkanalsystems 121 und des zweiten Abluftstroms A₂ des zweiten Abluftkanalsystems 122 erlaubt die Ausbildung mehrerer Klimatisierungszonen 12.1, 12.2 im Innenraum 12 des spurgeführten Fahrzeugs 1.

Gemäß Fig.4 sind zwei Klimatisierungszonen 12.1, 12.2 im Fahrzeuginnenraum 12 in Querrichtung des spurgeführten Fahrzeugs 1 nebeneinander ausbildbar, wobei eine erste Klimatisierungszone 12.1 auf der einen Seite der Mitte des Fahrzeuginnenraums 12 ausbildbar ist und eine zweite Klimatisierungszone 12.2 auf der anderen Seite der Mitte des Fahrzeuginnenraums 12 ausbildbar ist.

Hierdurch kann der Erwärmung einer Fahrzeugseite durch Sonneneinstrahlung S entgegengewirkt werden.

Wie aus der Fig. 5 ersichtlich ist, ist durch die Auslenkung der Verstelleinrichtung 125 in ausgelenkt Stellung der erste Abluftstrom A₁ im Volumenstrom größer ausgebildet als der zweite Abluftstrom A₂. In der Folge werden asymmetrische Abluftmengen aus dem Innenraum abgesaugt und es stellt sich bei konstantem Zuluftstrom Z eine asymmetrische Luftverteilung LV im Innenraum 12 ein, da mehr Luft in den Bereich der Abluftansaugöffnung 130 des ersten Abluftkanalsystems 121 strömt und durch diese angesaugt wird.

Nachfolgend wird anhand der Figuren das Verfahren zum Betreiben eines Abluftsystems 120 für ein spurgeführtes Fahrzeug 1 zum Personentransport und das Verfahren zum Betreiben eines Klimatisierungssystems 120 für ein spurgeführtes Fahrzeug 1 zum Personentransport beschrieben.

Das Verfahren zum Betreiben des Abluftsystems 120 für das spurgeführtes Fahrzeug 1 zum Personentransport ist dabei wie folgt ausgebildet. Das Abluftsystem 121 umfasst, wie oben ausgeführt zumindest das erste Abluftkanalsystem 121 und zumindest das zweite Abluftkanalsystem 122. Das Verfahren umfasst den folgenden Schritt: im Volumenstrom unterschiedliches Einstellen des ersten Abluftstroms A₁ des ersten Abluftkanalsystems 121 und eines zweiten Abluftstroms A₂ des zweiten Abluftkanalsystems 122.

Ferner umfasst das Verfahren zum Betreiben des Abluftsystems 120 den folgenden Schritt: Einstellen des ersten Abluftstroms A₁ und/oder des zweiten Abluftstroms A₂ des Abluftsystems 120 durch zumindest eine Verstelleinrichtung 125.

Das Verfahren zum Betreiben des Klimatisierungssystems 10 für das spurgeführte Fahrzeug 1 zum Personentransport, umfasst das Verfahren zum Betreiben eines Abluftsystems 120. Das Klimatisierungssystem 120 weist das Abluftsystem 120, ein Klimagerät 100 zur Klimatisierung des Innenraums 12 des spurgeführten Fahrzeugs 1 und die zumindest eine Zuluftvorrichtung 110 auf.

Das Verfahren zum Betreiben des Klimatisierungssystems 10 umfasst den Schritt des Bereitstellens eines Zuluftstroms Z durch die Zuluftvorrichtung 110.

Ferner umfasst das Verfahren zum Betreiben des Klimatisierungssystems 10 den Schritt des im Volumenstrom unterschiedlichen Einstellens des ersten Abluftstroms A₁ des ersten Abluftkanalsystems 121 und des zweiten Abluftstroms A₂ des zweiten Abluftkanalsystems 122 zur Ausbildung mehrerer Klimatisierungszonen 12.1, 12.2 im Innenraum 12 des spurgeführten Fahrzeugs 1.

Ferner umfasst das Verfahren zum Betreiben des Klimatisierungssystems 10 den Schritt des Zuführens des ersten Abluftstroms A₁ durch das erste Abluftkanalsystem 121 und des zweiten Abluftstroms A₂ durch das zweite Abluftkanalsystem 122 zu dem zumindest einen Klimagerät 100.

Weiterhin umfassen das Verfahren zum Betreiben des Klimatisierungssystems 10 ebenso wie das Verfahren zum Betreiben des Abluftsystems 120 die folgenden Schritte: Messen eines ersten Temperaturwerts durch einen dem ersten Abluftkanalsystem 121 zugeordneten ersten Temperatursensor 123; Messen eines zweiten Temperaturwerts durch einen dem zweiten Abluftkanalsystem 122 zugeordneten zweiten Temperatursensor 124; Übermitteln des ersten Temperaturwerts des ersten Temperatursensors 123 und des zweiten Temperaturwerts des zweiten Temperatursensors 124 an eine betriebsmäßig mit diesen verbundene Steuerung des Abluft- und/oder Klimatisierungssystems 10; Ansteuern der zumindest einen Verstelleinrichtung 125 durch die Steuerung des Abluft- und/oder Klimatisierungssystems 10, wodurch der erste Abluftstrom A₁ des ersten Abluftkanalsystems 121 und der zweite Abluftstrom A₂ des zweiten Abluftkanalsystems 122 im Volumenstrom unterschiedlich eingestellt wird.

Weiter umfassen das Verfahren zum Betreiben des Klimatisierungssystems 10 ebenso wie das Verfahren zum Betreiben des Abluftsystems 120 die folgenden Schritte: im Volumenstrom unterschiedliches Einstellen des ersten Abluftstroms A₁ des ersten Abluftkanalsystems 121 und des zweiten Abluftstroms A₂ des zweiten Abluftkanalsystems 122 durch eine zentrale Verstelleinrichtung 125, die vorzugsweise als Klappe ausgebildet ist, und dabei Konstanthalten der Summe des Volumenstroms aus dem ersten Abluftstrom A₁ und dem zweiten Abluftstrom A₂ bei einer gegebenen Abluftleistung während des Einstellens des ersten Abluftstroms A₁ und des zweiten Abluftstroms A₂.

Ferner umfassen das Verfahren zum Betreiben des Klimatisierungssystems 10 ebenso wie das Verfahren zum Betreiben des Abluftsystems 120 die folgenden Schritte: Durchströmen von Abluft durch das erste Abluftkanalsystem 121 und das zweite Abluftkanalsystem 122, die sich jeweils entlang oder innerhalb zumindest zweier sich parallel zur Längsachse des spurgeführten Fahrzeugs 1 erstreckenden Seitenwände 16 erstecken.

Schließlich umfasst das Verfahren zum Betreiben des Klimatisierungssystems 10 ebenso wie das Verfahren zum Betreiben des Abluftsystems 120 den folgenden Schritt: Ansaugen von Luft aus dem Innenraum 12 durch jeweils eine im Bodenbereich 15 des spurgeführten Fahrzeugs 1 angeordnete Abluftansaugöffnung 130 in das erste Abluftkanalsystem 121 und das zweite Abluftkanalsystem 122 durch ein sich im Dachbereich 18 des spurgeführten Fahrzeugs 1 angeordnetes Klimagerät 110 zum Bereitstellen zweier Klimatisierungszonen 12.1, 12.2 im Fahrzeuginnenraum 12 in Querrichtung des spurgeführten Fahrzeugs 1 nebeneinander, wobei sich eine Klimatisierungszone 12.1 auf der einen Seite der Mitte des Fahrzeuginnenraums 12 befindet und sich die andere Klimatisierungszone 12.2 auf der anderen Seite der Mitte des Fahrzeuginnenraums 12 befindet.

Abschließend sei erwähnt, dass die Merkmale aller oben beschriebenen Ausführungsvarianten untereinander in beliebiger Weise kombiniert werden können, um weitere andere Ausführungsbeispiele der Erfindung zu bilden. Auch können alle Merkmale von Unteransprüchen jeweils für sich mit jedem Merkmal jedes anderen der Ansprüche kombiniert werden, und zwar jeweils für sich allein oder in beliebiger Kombination, um weitere andere Ausführungsbeispiele zu erhalten.

Obwohl die Erfindung im Detail durch ein Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Unabhängig vom grammatikalischen Geschlecht eines bestimmten Begriffes sind Personen mit männlicher, weiblicher oder anderer Geschlechteridentität mit umfasst.

## Patentansprüche

1. Abluftsystem (120) für ein Klimatisierungssystem (10) eines spurgeführten Fahrzeugs (1) zum Personentransport, zumindest ein erstes Abluftkanalsystem (121) und zumindest ein zweites Abluftkanalsystem (122), wobei das Abluftsystem (120) derart ausgestaltet ist, dass ein erster Abluftstrom (A₁) des ersten Abluftkanalsystems (121) und ein zweiter Abluftstrom (A₂) des zweiten Abluftkanalsystems (122) im Volumenstrom unterschiedlich einstellbar sind, das Abluftsystem (120) weiter umfassend eine Verstelleinrichtung (125) zum im Volumenstrom unterschiedlichen Einstellen des ersten Abluftstroms (A₁) und/oder des zweiten Abluftstroms (A₂), **dadurch gekennzeichnet, dass** die zumindest eine Verstelleinrichtung (125) eine zentrale Verstelleinrichtung (125) ist, die vorzugsweise als Klappe ausgebildet ist, und im Abluftsystem (120) derart angeordnet ist, dass durch diese der erste Abluftstrom (A₁) des ersten Abluftkanalsystems (121) im Volumenstrom einstellbar ist und der zweite Abluftstrom (A₂) des zweiten Abluftkanalsystems (122) im Volumenstrom einstellbar ist, wobei die Summe aus dem ersten Abluftstrom (A₁) und dem zweiten Abluftstrom (A₂) bei einer gegebenen Gesamtabluftleistung des Abluftsystems (120) konstant ist.

2. Abluftsystem (120) nach Anspruch 1,
**dadurch gekennzeichnet, dass**
das Abluftsystem (120) einen dem ersten Abluftkanalsystem (121) zugeordneten ersten Temperatursensor (123) aufweist und einen dem zweiten Abluftkanalsystem (122) zugeordneten zweiten Temperatursensor (124) aufweist, wobei der erste Temperatursensor (123) und der zweite Temperatursensor (124) betriebsmäßig mit einer Steuerung verbunden sind und die Steuerung dazu eingerichtet ist, die zumindest eine Verstelleinrichtung (125) einzustellen, wodurch der erste Abluftstrom (A₁) des ersten Abluftkanalsystems (121) und der zweite Abluftstrom (A₂) des zweiten Abluftkanalsystems (122) im Volumenstrom unterschiedlich einstellbar sind.

3. Klimatisierungssystem (10) umfassend ein Abluftsystem (120) nach einem der Ansprüche 1 bis 2,
**gekennzeichnet durch**
ein Klimagerät (100) zur Klimatisierung eines Innenraums (12) des spurgeführten Fahrzeugs (1) und zumindest eine Zuluftvorrichtung (110) zur Bereitstellung eines Zuluftstroms (Z) für den Innenraum (12), wobei die im Volumenstrom unterschiedliche Einstellbarkeit des ersten Abluftstrom (A₁) des ersten Abluftkanalsystems (121) und des zweiten Abluftstroms (A₂) des zweiten Abluftkanalsystems (122) die Ausbildung mehrerer Klimatisierungszonen (12.1, 12.2) im Innenraum (12) des spurgeführten Fahrzeugs (1) erlaubt.

4. Klimatisierungssystem (10) nach Anspruch 3,
**dadurch gekennzeichnet, dass**
das erste Abluftkanalsystem (121) und das zweite Abluftkanalsystem (122) derart ausgebildet sind, dass der erste Abluftstrom (A₁) und der zweite Abluftstrom (A₂) dem zumindest einem Klimagerät (100) zuführbar sind.

5. Spurgeführtes Fahrzeug (1) zur Personenbeförderung mit einem Innenraum (12) umfassend, ein Abluftsystem (120) nach einem der Ansprüche 1 und 2 oder Klimatisierungssystem (10) nach einem der Ansprüche 3 und 4, wobei das spurgeführte Fahrzeug (1) zumindest zwei sich parallel zur Längsachse des spurgeführten Fahrzeugs (1) erstreckende Seitenwände (16), einen Bodenbereich (15) und einen Dachbereich (18) aufweist, wobei sich das erste Abluftkanalsystem (121) und das zweite Abluftkanalsystem (122) sich jeweils entlang oder innerhalb einer der Seitenwände (16) erstrecken.

6. Spurgeführtes Fahrzeug (1) nach Anspruch 5,
**dadurch gekennzeichnet, dass**
das Klimagerät (110) im Dachbereich (18) des spurgeführten Fahrzeugs (1) angeordnet ist und das erste Abluftkanalsystem (121) und das zweite Abluftkanalsystem (122) im Bodenbereich (15) jeweils zumindest eine Abluftansaugöffnung (130) aufweisen.

7. Spurgeführtes Fahrzeug (1) nach Anspruch 5 oder 6,
**dadurch gekennzeichnet, dass**
zwei Klimatisierungszonen (12.1, 12.2) im Fahrzeuginnenraum (12) in Querrichtung des spurgeführten Fahrzeugs (1) nebeneinander ausbildbar sind und eine erste Klimatisierungszone (12.1) auf der einen Seite der Mitte des Fahrzeuginnenraums (12) ausbildbar ist und eine zweite Klimatisierungszone (12.2) auf der anderen Seite der Mitte des Fahrzeuginnenraums (12) ausbildbar ist.

8. Verfahren zum Betreiben eines Abluftsystems (120) für ein spurgeführtes Fahrzeug (1) zum Personentransport, umfassend zumindest ein erstes Abluftkanalsystem (121) und zumindest ein zweites Abluftkanalsystem (122), wobei das Verfahren den folgenden Schritt umfasst:
- im Volumenstrom unterschiedliches Einstellen eines ersten Abluftstroms (A₁) des ersten Abluftkanalsystems (121) und eines zweiten Abluftstroms (A₂) des zweiten Abluftkanalsystems (122) durch eine zentrale Verstelleinrichtung (125), die vorzugsweise als Klappe ausgebildet ist, und dabei
- Konstanthalten der Summe des Volumenstroms aus dem ersten Abluftstrom (A₁) und dem zweiten Abluftstrom (A₂) bei einer gegebenen Abluftleistung während des Einstellens des ersten Abluftstroms (A₁) und des zweiten Abluftstroms (A₂).

9. Verfahren zum Betreiben eines Klimatisierungssystems (120) für ein spurgeführtes Fahrzeug (1) zum Personentransport, umfassend das Verfahren zum Betreiben eines Abluftsystems (120) nach Anspruch 8,
wobei das Klimatisierungssystem (120), das Abluftsystem (120), ein Klimagerät (100) zur Klimatisierung eines Innenraums (12) des spurgeführten Fahrzeugs (1) und zumindest eine Zuluftvorrichtung (110) aufweist, und wobei das Verfahren folgende Schritte umfasst:
- Bereitstellen eines Zuluftstroms (Z) durch die Zuluftvorrichtung (110);
- im Volumenstrom unterschiedliches Einstellen des ersten Abluftstroms (A₁) des ersten Abluftkanalsystems (121) und des zweiten Abluftstroms (A₂) des zweiten Abluftkanalsystems (122) zur Ausbildung mehrerer Klimatisierungszonen (12.1, 12.2) im Innenraum (12) des spurgeführten Fahrzeugs (1).

10. Verfahren nach Anspruch 9,
**gekennzeichnet durch** den folgenden Schritt:
- Zuführen des ersten Abluftstroms (A₁) durch das erste Abluftkanalsystem (121) und des zweiten Abluftstroms (A₂) durch das zweite Abluftkanalsystem (122) zu dem zumindest einen Klimagerät (100).

11. Verfahren nach einem der Ansprüche 8 bis 10, **gekennzeichnet durch** folgende Schritte:
- Messen eines ersten Temperaturwerts durch einen dem ersten Abluftkanalsystem (121) zugeordneten ersten Temperatursensor (123);
- Messen eines zweiten Temperaturwerts durch einen dem zweiten Abluftkanalsystem (122) zugeordneten zweiten Temperatursensor (124);
- Übermitteln des ersten Temperaturwerts des ersten Temperatursensors (123) und des zweiten Temperaturwerts des zweiten Temperatursensors (124) an eine betriebsmäßig mit diesen verbundene Steuerung des Abluft- und/oder Klimatisierungssystems (10);
- Ansteuern der zumindest einen Verstelleinrichtung (125) durch die Steuerung des Abluft- und/oder Klimatisierungssystems (10), wodurch der erste Abluftstrom (A₁) des ersten Abluftkanalsystems (121) und der zweite Abluftstrom (A₂) des zweiten Abluftkanalsystems (122) im Volumenstrom unterschiedlich eingestellt wird.

12. Verfahren nach einem der Ansprüche 8 bis 11, **gekennzeichnet durch** folgenden Schritt:
- Durchströmen von Abluft durch das erste Abluftkanalsystem (121) und das zweite Abluftkanalsystem (122), die sich jeweils entlang oder innerhalb zumindest zweier sich parallel zur Längsachse des spurgeführten Fahrzeugs (1) erstreckenden Seitenwände (16) erstecken.

13. Verfahren nach Anspruch 12,
**gekennzeichnet durch** folgenden Schritt:
- Ansaugen von Luft aus dem Innenraum (12) durch jeweils eine im Bodenbereich (15) des spurgeführten Fahrzeugs (1) angeordnete Abluftansaugöffnung (130) in das erste Abluftkanalsystem (121) und das zweite Abluftkanalsystem (122) durch ein sich im Dachbereich (18) des spurgeführtes Fahrzeugs (1) angeordnetes Klimagerät (110) zum Bereitstellen zweier Klimatisierungszonen (12.1, 12.2) im Fahrzeuginnenraum (12) in Querrichtung des spurgeführten Fahrzeugs (1) nebeneinander, wobei sich eine Klimatisierungszone (12.1) auf der einen Seite der Mitte des Fahrzeuginnenraums (12) befindet und sich die andere Klimatisierungszone (12.2) auf der anderen Seite der Mitte des Fahrzeuginnenraums (12) befindet.

## Claims

1. Exhaust air system (120) for an air conditioning system (10) of a track-guided vehicle (1) for passenger transportation, at least a first exhaust air duct system (121) and at least a second exhaust air duct system (122), wherein the exhaust air system (120) is embodied such that a first exhaust air flow (A₁) of the first exhaust air duct system (121) and a second exhaust air flow (A₂) of the second exhaust air duct system (122) can be adjusted differently in terms of volume flow, the exhaust air system (120) further comprising an adjustment facility (125) for adjusting the first exhaust air flow (A₁) and/or the second exhaust air flow (A₂) differently in terms of volume flow, **characterised in that** the at least one adjustment facility (125) is a central adjustment facility (125) which is preferably embodied as a flap and is arranged in the exhaust air system (120) such that by this means the first exhaust air flow (A₁) of the first exhaust air duct system (121) can be adjusted in terms of volume flow and the second exhaust air flow (A₂) of the second exhaust air duct system (122) can be adjusted in terms of volume flow, wherein the total of the first exhaust air flow (A₁) and the second exhaust air flow (A₂) is constant with a given overall exhaust air power of the exhaust air system (120).

2. Exhaust air system (120) according to claim 1, **characterised in that**
the exhaust air system (120) has a first temperature sensor (123) assigned to the first exhaust air duct system (121) and a second temperature sensor (124) assigned to the second exhaust air duct system (122), wherein the first temperature sensor (123) and the second temperature sensor (124) are connected to a controller under normal operating conditions and the controller is designed to adjust the at least one adjustment facility (125), as a result of which the first exhaust air flow (A₁) of the first exhaust air duct system (121) and the second exhaust air flow (A₂) of the second exhaust air duct system (122) can be adjusted differently in terms of volume flow.

3. Air conditioning system (10) comprising an exhaust air system (120) according to one of claims 1 to 2,
**characterised by**
an air conditioning device (100) for air conditioning an interior (12) of the track-guided vehicle (1) and at least one air supply apparatus (110) for providing a supply air flow (Z) for the interior (12), wherein the adjustability of the first exhaust air flow (A₁) of the first exhaust air duct system (121) and the second exhaust air flow (A₂) of the second exhaust air duct system (122) which differ in terms of volume flow permits the formation of several air conditioning zones (12.1, 12.2) in the interior (12) of the track-guided vehicle (1).

4. Air conditioning system (10) according to claim 3,
**characterised in that**
the first exhaust air duct system (121) and the second exhaust air duct system (122) are embodied such that the first exhaust air flow (A₁) and the second exhaust air flow (A₂) can be fed to the at least one air conditioning device (100).

5. Track-guided vehicle (1) for passenger transportation with an interior (12) comprising an exhaust air system (120) according to one of claims 1 and 2 or air conditioning system (10) according to one of claims 3 and 4,
wherein the track-guided vehicle (1) has at least two side walls (16) extending parallel to the longitudinal axis of the track-guided vehicle (1), a floor area (15) and a roof area (18), wherein the first exhaust air duct system (121) and the second exhaust air duct system (122) extend in each case along or within one of the side walls (16).

6. Track-guided vehicle (1) according to claim 5,
**characterised in that**
the air conditioning device (110) is arranged in the roof area (18) of the track-guided vehicle (1) and the first exhaust air duct system (121) and the second exhaust air duct system (122) have at least one exhaust air intake opening (130) in the floor area (15) in each case.

7. Track-guided vehicle (1) according to claim 5 or 6, **characterised in that**
two air conditioning zones (12.1, 12.2) can be formed adjacent to one another in the vehicle interior (12) in the transverse direction of the track-guided vehicle (1), and a first air conditioning zone (12.1) can be formed on the one side of the centre of the vehicle interior (12) and a second air conditioning zone (12.1) can be formed on the other side of the centre of the vehicle interior (12).

8. Method for operating an exhaust air system (120) for a track-guided vehicle (1) for passenger transportation, comprising at least a first exhaust air duct system (121) and at least a second exhaust air duct system (122), wherein the method comprises the following step:
- adjusting a first exhaust air flow (A₁) of the first exhaust air duct system (121) and a second exhaust air flow (A₂) of the second exhaust air duct system (122) differently in terms of volume flow by means of a central adjustment facility (125), which is preferably embodied as a flap, and in the process
- maintaining the sum of the volume flow from the first exhaust air flow (A₁) and the second exhaust air flow (A₂) with a given exhaust air power while the first exhaust air flow (A₁) and the second exhaust air flow (A₂) are adjusted.

9. Method for operating an air conditioning system (120) for a track-guided vehicle (1) for passenger transportation, comprising the method for operating an exhaust air system (120) according to claim 8,
wherein the air conditioning system (120) has the exhaust air system (120), an air conditioning device (100) for air conditioning an interior (12) of the track-guided vehicle (1) and at least one supply air apparatus (110), and wherein the method comprises the following steps:
- providing a supply air flow (Z) through the supply air apparatus (110);
- adjusting the first exhaust air flow (A₁) of the first exhaust air duct system (121) and the second exhaust air flow (A₂) of the second exhaust air duct system (122) differently in terms of volume flow in order to form a number of air conditioning zones (12.1, 12.2) in the interior (12) of the track-guided vehicle (1).

10. Method according to claim 9,
**characterised by** the following step:
- supplying the first exhaust air flow (A₁) through the first exhaust air duct system (121) and the second exhaust air flow (A₂) through the second exhaust air duct system (122) to the at least one air conditioning device (100).

11. Method according to one of claims 8 to 10, **characterised by** the following steps:
- measuring a first temperature value by means of a first temperature sensor (123) assigned to the first exhaust air duct system (121);
- measuring a second temperature value by means of a second temperature sensor (124) assigned to the second exhaust air duct system (122);
- transferring the first temperature value of the first temperature sensor (123) and the second temperature value of the second temperature sensor (124) to a controller of the exhaust air and/or air conditioning system (10) connected hereto under normal operating conditions;
- controlling the at least one adjustment facility (125) by means of the controller of the exhaust air and/or air conditioning system (10), as a result of which the first exhaust air flow (A₁) of the first exhaust air duct system (121) and the second exhaust air flow (A₂) of the second exhaust air duct system (122) is adjusted differently in terms of volume flow.

12. Method according to one of claims 8 to 11, **characterised by** the following step:
- flowing exhaust air through the first exhaust air duct system (121) and the second exhaust air duct system (122), which extend in each case along or within at least two side walls (16) extending parallel to the longitudinal axis of the track-guided vehicle (1).

13. Method according to claim 12,
**characterised by** the following step:
- taking in air from the interior (12) through in each case an exhaust air intake opening (130) arranged in the floor area (15) of the track-guided vehicle (1) into the first exhaust air duct system (121) and the second exhaust air duct system (122) through an air conditioning device (110) arranged in the roof area (18) of the track-guided vehicle (1) for providing two air conditioning zones (12.1, 12.2) adjacent to one another in the vehicle interior (12) in the transverse direction of the track-guided vehicle (1), wherein an air conditioning zone (12.1) is located on the one side of the centre of the vehicle interior (12) and the other air conditioning zone (12.2) is located on the other side of the centre of the vehicle interior (12).

## Revendications

1. Système (120) d'air d'échappement d'un système (10) de conditionnement d'air d'un véhicule (1) guidé sur rail pour le transport des personnes, comprenant au moins un premier système (121) de conduit d'air d'échappement et au moins un deuxième système (122) de conduit d'air d'échappement, dans lequel le système (120) d'air d'échappement est conformé, de manière à ce qu'un premier courant (A₁) d'air d'échappement du premier système (121) de conduit d'air d'échappement et un deuxième courant (A₂) d'air d'échappement du deuxième système (122) de conduit d'air d'échappement soit réglable de manière différente en courant en volume, le système (120) d'air d'échappement comprenant, en outre, au moins un dispositif (125) de réglage pour le réglage d'une manière différente en courant en volume du premier courant (A₁) d'air d'échappement et/ou du deuxième courant (A₂) d'air d'échappement, **caractérisé en ce que** le au moins un dispositif (125) de réglage est un dispositif (125) de réglage centralisé, qui est constitué de préférence sous la forme d'un volet et qui est disposé dans le système (120) d'air d'échappement, de manière à ce que, par celui-ci, le premier courant (A₁) d'air d'échappement du premier système (121) de conduit d'air d'échappement soit réglable en courant en volume et de manière à ce que le deuxième courant (A₂) d'air d'échappement du deuxième système (122) de conduit d'air d'échappement soit réglable en courant en volume, dans lequel la somme du premier courant (A₁) d'air d'échappement et du deuxième courant (A₂) d'air d'échappement est constante pour une puissance d'air d'échappement d'ensemble donné du système (120) d'air d'échappement.

2. Système (120) d'air d'échappement suivant la revendication 1,
**caractérisé en ce que**
le système (120) d'air d'échappement a une première sonde (123) de température affectée au premier système (121) de conduit d'air d'échappement et une deuxième sonde (124) de température affectée au deuxième système (122) de conduit d'air d'échappement, dans lequel la première sonde (123) de température et la deuxième sonde (124) de température sont reliées en fonctionnement à une commande et la commande est agencée pour régler le au moins un dispositif (125) de réglage, grâce à quoi le premier courant (A₁) d'air d'échappement du premier système (121) de conduit d'air d'échappement et le deuxième courant (A₂) d'air d'échappement du deuxième système (122) de conduit d'air d'échappement sont réglables de manière différente en volume.

3. Système (10) de conditionnement d'air comprenant un système (120) d'air d'échappement suivant l'une des revendications 1 à 2, **caractérisé par**
un appareil (100) de conditionnement d'air pour le conditionnement d'air d'un habitacle (12) du véhicule (1) guidé sur rail et par au moins un dispositif (110) d'apport d'air pour que l'habitacle (12) dispose d'un courant (Z) d'apport d'air, dans lequel la réglabilité différente en courant en volume du premier courant (A₁) d'air d'échappement du premier système (121) de conduit d'air d'échappement et du deuxième courant (A₂) d'air d'échappement du deuxième système (122) de conduit d'air d'échappement permet la constitution de plusieurs zones (12.1, 12.2) de conditionnement d'air dans l'habitacle (12) du véhicule (1) guidé sur rail.

4. Système (10) de conditionnement d'air suivant la revendication 3,
**caractérisé en ce que**
le premier système (121) de conduit d'air d'échappement et le deuxième système (122) de conduit d'air d'échappement sont constitués, de manière à ce que le premier courant (A₁) d'air d'échappement et le deuxième courant (A₂) d'air d'échappement puissent être envoyés à l'au moins un appareil (100) de conditionnement d'air.

5. Véhicule (1) guidé sur rail pour le transport des personnes, ayant un habitacle (12), comprenant un système (120) d'air d'échappement suivant l'une des revendications 1 et 2 ou un système (10) de conditionnement d'air suivant l'une des revendications 3 et 4,
dans lequel le véhicule (1) guidé sur rail a au moins deux parois (16) latérales s'étendant parallèlement à l'axe longitudinal du véhicule (1) guidé sur rail, une partie (15) de plancher et une partie (18) de plafond, dans lequel le premier système (121) de conduit d'air d'échappement et le deuxième système (122) de conduit d'air d'échappement s'étendent respectivement le long ou à l'intérieur de l'une des parois (16) latérales.

6. Véhicule (1) guidé sur rail suivant la revendication 5, **caractérisé en ce que**
l'appareil (110) de conditionnement d'air est disposé dans la partie (18) de plafond du véhicule (1) guidé sur rail et le premier système (121) de conduit d'air d'échappement et le deuxième système (122) de conduit d'air d'échappement ont, dans la partie (15) de plancher, chacun au moins une ouverture (130) d'aspiration d'air d'échappement.

7. Véhicule (1) guidé sur rail suivant la revendication 5 ou 6,
**caractérisé en ce que**
deux zones (12.1, 12.2) de conditionnement d'air peuvent, dans l'habitacle (12) du véhicule, être constituées l'une à côté de l'autre dans la direction transversale du véhicule (1) guidé sur rail et une première zone (12.1) de conditionnement d'air peut être constituée d'un premier côté du milieu de l'habitacle (12) du véhicule et une deuxième zone (12.2) de conditionnement d'air de l'autre côté du milieu de l'habitacle (12) du véhicule.

8. Procédé pour faire fonctionner un système (120) d'air d'échappement d'un véhicule (1) guidé sur rail pour le transport des personnes, comprenant au moins un premier système (121) de conduit d'air d'échappement et au moins un deuxième système (122) de conduit d'air d'échappement, dans lequel le procédé comprend le stade suivant :
- réglage d'une manière différente en courant en volume d'un premier courant (A₁) d'air d'échappement du premier système (121) de conduit d'air d'échappement et d'un deuxième courant (A₂) d'air d'échappement du deuxième système (122) de conduit d'air d'échappement par un dispositif (125) de réglage centralisé, qui est constitué de préférence sous la forme d'un volet, et ainsi
- maintien constant de la somme du courant en volume composé du premier courant (A₁) d'air d'échappement et du deuxième courant (A₂) d'air d'échappement pour une puissance d'air d'échappement donnée pendant le réglage du premier courant (A₁) d'air d'échappement et du deuxième courant (A₂) d'air d'échappement.

9. Procédé pour faire fonctionner un système (120) de conditionnement d'air d'un véhicule (1) guidé sur rail pour le transport des personnes, comprenant le procédé de fonctionnement d'un système (120) d'air d'échappement suivant la revendication 8,
dans lequel le système (120) de conditionnement d'air a le système (120) d'air d'échappement, un appareil (100) de conditionnement d'air pour le conditionnement d'air d'un habitacle (12) du véhicule (1) guidé sur rail et au moins un dispositif (110) d'apport d'air, et dans lequel le procédé comprend les stades suivants :
- mise à disposition d'un courant (Z) d'apport d'air par le dispositif (110) d'apport d'air ;
- réglage de manière différente en courant en volume du premier courant (A₁) d'air d'échappement du premier système (121) de conduit d'air d'échappement et du deuxième courant (A₂) d'air d'échappement du deuxième système (122) de conduit d'air d'échappement pour la constitution de plusieurs zones (12.1, 12.2) de conditionnement d'air dans l'habitacle (12) du véhicule (1) guidé sur rail.

10. Procédé suivant la revendication 9,
**caractérisé par** le stade suivant :
- envoi du premier courant (A₁) d'air d'échappement par le premier système (121) de conduit d'air d'échappement et du deuxième courant (A₂) d'air d'échappement par le deuxième système (122) de conduit d'air d'échappement au au moins un appareil (100) de conditionnement d'air.

11. Procédé suivant l'une des revendications 8 à 10, **caractérisé par** des stades suivants :
- mesure d'une première valeur de température par une première sonde (123) de température affectée au premier système (121) de conduit d'air d'échappement ;
- mesure d'une deuxième valeur de température par une deuxième sonde (124) de température affectée au deuxième système (122) de conduit d'air d'échappement ;
- transmission de la première valeur de température de la première sonde (123) de température et de la deuxième valeur de température de la deuxième sonde (124) de température à une commande reliée à celles-ci en fonctionnement du système (10) d'air d'échappement et/ou de conditionnement d'air ;
- commande du au moins un dispositif (125) de réglage par la commande du système (10) d'air d'échappement et/ou de conditionnement d'air, grâce à quoi on règle d'une manière différente en courant en volume le premier courant (A₁) d'air d'échappement du premier système (121) de conduit d'air d'échappement et le deuxième courant (A₂) d'air d'échappement du deuxième système (122) de conduit d'air d'échappement.

12. Procédé suivant l'une des revendications 8 à 11,
**caractérisé par** le stade suivant :
- passage d'air d'échappement dans le premier système (121) de conduit d'air d'échappement et le deuxième système (122) de conduit d'air d'échappement, qui s'étendent respectivement suivant ou à l'intérieur d'au moins deux parois (16) latérales s'étendant parallèlement à l'axe longitudinal du véhicule (1) guidé sur rail.

13. Procédé suivant la revendication 12,
**caractérisé par** le stade suivant :
- aspiration d'air de l'habitacle (12), par respectivement une ouverture (130) d'aspiration d'air d'échappement disposée dans la partie (15) de plancher du véhicule (1) guidé sur rail, dans le premier système (121) de conduit d'air d'échappement et dans le deuxième système (122) de conduit d'air d'échappement par un appareil (110) de conditionnement d'air disposé dans la partie (18) de plafond du véhicule (1) ferroviaire, pour disposer de deux zones (12.1, 12.2) de conditionnement d'air dans l'habitacle (12) du véhicule côte à côte dans la direction transversale du véhicule (1) guidé sur rail, dans lequel une zone (12.1) de conditionnement d'air se trouve d'un côté du milieu de l'habitacle (12) du véhicule et l'autre zone (12.2) de conditionnement d'air se trouve de l'autre côté du milieu de l'habitacle (12) du véhicule.
